# EUROPEAN PATENT SPECIFICATION

(11) **EP 1 652 823 B1**
(45) Date of publication and mention of the grant of the patent: **24.06.2009**
(21) Application number: 05394023.5
(22) Date of filing: 09.09.2005
(51) Int. Cl.: C02F 1/78, C02F 1/58

(54) **A rainwater treatment process**
Verfahren zur Behandlung von Regenwasser
Procédé de traitement des eaux de pluie

(30) Priority: 28.10.2004 IE 20040718 P
(43) Date of publication of application: 03.05.2006
(73) Proprietor: Leonard, Owen Thomas, Dromahair, County Leitrim (IE)
(72) Inventor: Leonard, Owen Thomas, Dromahair, County Leitrim (IE)
(74) Representative: Schütte, Gearoid

(56) References cited:
- GB-A- 1 419 537
- US-A- 4 599 166
- US-A- 5 683 576
- US-A1- 2004 144 704
- US-B1- 6 299 775
- US-B1- 6 576 096
- PATENT ABSTRACTS OF JAPAN vol. 014, no. 480 (C-0771), 19 October 1990 (1990-10-19) & JP 02 198693 A (APANASU:KK), 7 August 1990 (1990-08-07)
- PATENT ABSTRACTS OF JAPAN vol. 2003, no. 02, 5 February 2003 (2003-02-05) & JP 2002 301484 A (FUSO KENSETSU KOGYO KK), 15 October 2002 (2002-10-15)
- PATENT ABSTRACTS OF JAPAN vol. 2002, no. 10, 10 October 2002 (2002-10-10) & JP 2002 177947 A (YASKAWA ELECTRIC CORP), 25 June 2002 (2002-06-25)

## Description

### Introduction

The present invention relates to a rainwater treatment process and assembly to provide potable water for dwellings, the process comprising gathering rainwater; delivering the rainwater to a storage tank; and treating the stored rainwater to render it suitable for drinking.

In this specification, the term "dwellings" is used to include not just simply domestic houses, but many other houses and buildings such as hotels, schools, retail outlets, commercial buildings such as nurseries and horticultural sites, and so on.

It is well known to use rainwater for many uses, both domestically and industrially. In the domestic situation, such rainwater is used for toilet flushing, washing machines, garden watering and all other uses that do not require the rainwater to be potable. This is very often the case where houses are located in remote situations where water supply is problematical, to put it mildly, or is extremely expensive to provide. Similarly, in industrial situations, rainwater is often harvested to allow it to be used particularly for cleaning operations.

For example, in a domestic situation, of the order of half of the water consumption does not require drinking quality water. Typical systems for utilising water for this include a water storage tank, usually mounted underground and connected via various filters and the like to the sources of the rainwater which are usually drainpipes connected to guttering on the building. It will be appreciated that generally the rainwater collection site, i.e. where the water storage tank is located, has to be below ground, as it has to be connected to the downpipes of the building. Although the tank may be sited above ground, it is generally sited underground to ensure it will receive a sufficient supply of rainwater, but also it needs to be underground or alternatively very heavily insulated to avoid freezing over during adverse climate conditions. However, as stated already, known systems do not provide potable water. Thus, there is still a need for the supply of suitable drinking water.

There are other advantages in the use of rainwater that have long been appreciated. They prevent or reduce the likelihood that lime will be deposited on various parts of the water system as the water is "soft". There are, however, other more important reasons for the use rainwater. As there is increased urbanisation, more and more rainwater is being delivered to drains and sewers where it then has to be recycled and, in many countries, is simply delivered to waste. The problem is that in urban areas, rainwater is mixed with other wastewater and this leads to having to provide very elaborate purification systems for this water which contains the rainwater. The rainwater itself is not very highly contaminated but because of being mixed with the other wastewater, it then requires considerable processing.

Additionally, the collection of rainwater reduces the load on ground water drainage systems and is particularly advantageous during high load conditions, such as storms.

US2004/0144704 (Johnson) describes a system for processing and recycling water that incorporates a dry well. Water from a number of sources, including rainwater, domestic wastewater and well water is routed to a storage tank. The water in the storage tank is passed through a purification system before being stored in a purified water tank. The water in the purified water tank is then ready for use in a household or other installation.

US4599166 (Gesslauer) describes an ozone drinking water purification apparatus. The apparatus comprises a refrigerated tank from which potable water may be drawn. Water is also drawn from the refrigerated tank and passed through a circulation line in which ozone is added to the water before being returned back into the refrigerated tank.

The present invention is directed towards overcoming these problems by providing a process and assembly for purifying such rainwater to render it potable.

### Statements of Invention

According to the invention, there is provided a rainwater treatment process to provide potable water for dwellings comprising:
gathering rainwater;
delivering the rainwater to a storage tank; and
treating the stored rainwater to render it suitable for drinking;
**characterised in that** the process comprises treating the rainwater by:
delivering the rainwater to a separate treatment tank;
injecting ozone into the treatment tank adjacent a bottom of the tank at preset time intervals for preset time durations; and
on requiring water, the water is drawn off from the treatment tank and delivered to an ozone extraction device prior to delivery for use.

The advantage of using ozone is that it is a very powerful oxidising agent, third among elements only to fluorine and atomic oxygen. Ozone can oxidise many organic compounds. It has been used commercially, in the treatment, for example, of wastewater. An ozone level of 0.04 ppm for four minutes has been shown to kill any bacteria, virus, mould and fungus in water. Ozone oxidises the transition metals to their higher oxidation state in which they usually form less soluble oxides that are then easy to separate by filtration. Iron, for example, is usually in the ferrous state when dissolved in water. When treated with ozone, iron yields ferric iron which is further oxidised in water to ferrum hydroxide. While it is accepted that the use of ozone for decades in water purification was known, it was not, we suggest, used in the manner of the present invention.

In carrying out the process, the additional step may be performed, as the water is being drawn off, of filtering to remove contaminants oxidised by the ozone.

In one process according to the invention, the steps are performed of:
sensing the level of liquid in the treatment tank;
injecting ozone into the treatment tank when the level falls below a preset level;
after a preset time, delivering rainwater to the treatment tank from the storage tank until a desired water level is reached; and
continuing to inject ozone for a further preset time.

The advantage of this is that ozone is only injected into the treatment tank as required.

In another process according to the invention, the treated water is delivered from the treatment tank to a separate draw-off tank; the ozone is injected into the water in the draw-off tank at preset time intervals and for preset time durations; and on requiring water, the water is drawn-off from the draw-off tank.

In this latter process of carrying out the invention, when the draw-off of water ceases, the draw-off tank may be topped up with water from the treatment tank and ozone is injected into the water in the draw-off tank. In this process, on the level of water in the draw-off tank falling below a preset level, the steps may be performed of:
the draw-off of water is stopped;
the draw-off tank is filled with treated water from the treatment tank;
ozone is injected into the water for a preset time; and
the further draw-off of water can take place.

The great advantage of having the separate tanks is that one can always be sure that when water is being drawn off, it has been adequately treated. It is not possible to draw off semi-treated water. Further, by injecting ozone into the treated water in the separate tank, it is possible to ensure that the correct level of sterility is maintained.

In one process according to the invention, recirculation of the water is carried out by drawing the water from the treatment tank, injecting ozone as it is being drawn off from the tank and delivering the treated water back to the treatment tank. This further improves the sterilising of the water.

In another way of carrying out the invention, on water being delivered to the treatment tank, the ozone is injected into the incoming water.

In another process of carrying out the invention, the ozone is injected adjacent a bottom of the tank and also the water may be delivered adjacent a bottom of the tank.

Further, the invention provides a rainwater treatment assembly comprising:
a rainwater storage tank;
a rainwater treatment tank connected to the storage tank;
an ozone generator;
an ozone diffuser in the treatment tank adjacent a bottom of the tank connected to the ozone generator;
a controller, including a water level sensor in the treatment tank for draw-off of water from the storage tank and operation of the ozone generator,
a system outlet pipe for connection to a water supply system of a dwelling; and
a filter connected to the system outlet pipe, the filter comprising an ozone dissipater.

This is a particularly suitable way of carrying out the invention.

In another embodiment of the invention, the assembly comprises:
a water inlet in the treatment tank adjacent a lowest part of the treatment tank;
a water feed pipe connected to the inlet; and
a venturii in the water feed pipe connected to the ozone generator.

There may also be provided a draw-off tank intermediate the treatment tank and the system outlet pipe, the draw-off tank being connected to the ozone generator and the controller. The advantage of this separate draw-off tank is that it ensures no water is drawn off that is not adequately treated.

For this latter assembly, the tank may comprise a composite tank divided into two separate storage sections to provide the draw-off and treatment tanks.

### Detailed Description of the Invention

The invention will be more clearly understood from the following description of some embodiments thereof, given by way of example only, with reference to the accompanying drawings, in which:
Fig. 1 is a view of a typical layout of a rainwater treating assembly according to the present invention,
Fig. 2 is a diagrammatic view of the system of Fig. 1,
Fig. 3 is a diagrammatic view of an alternative system according to the invention,
Fig. 4 is a diagrammatic view of a still further system according to the invention, and
Fig. 5 is a front view of the assembly illustrated in Fig. 4.

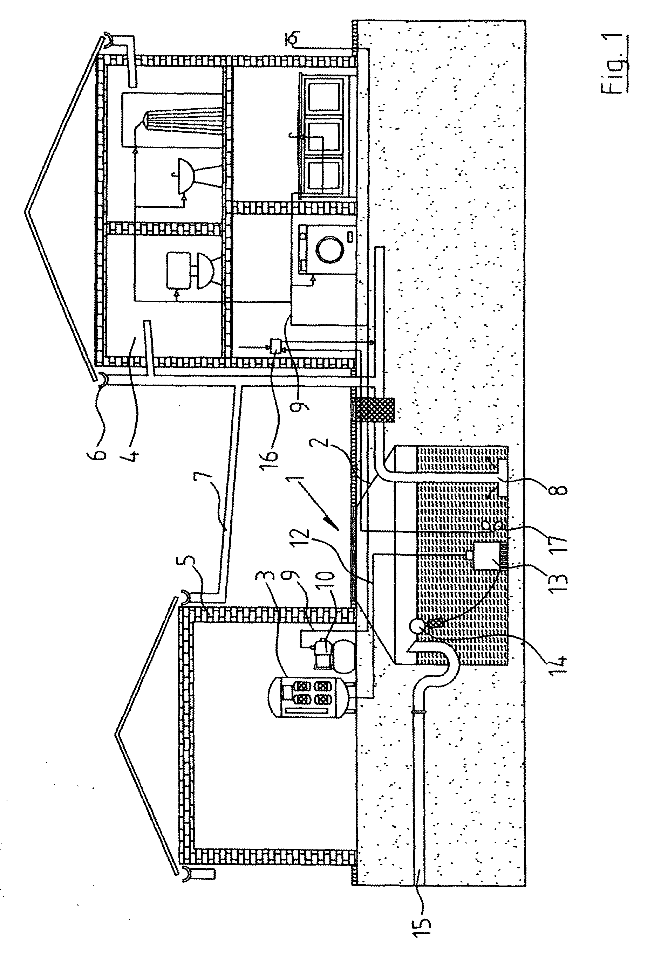

Referring to the drawings and initially to Fig. 1, there is illustrated a rainwater assembly, indicated generally by the reference numeral 1, comprising a rainwater storage tank 2 sited below ground and a treatment tank 3. There is also illustrated a house 4 and an outhouse 5 housing the treatment tank 3. The house 4 is illustrated with guttering 6 and various downpipes and other pipes 7 for collection of rainwater for delivery through a filter and calmed inlet 8 in the rainwater storage tank 2. The house 4 is supplied with treated rainwater through piping 9 by a pump 10 while the rainwater treatment tank 3 is fed by piping 12 from the tank 2 by a pump 13. The pump 13 is connected to a floating inlet 14. An overflow pipe 15 of conventional construction is provided in the tank 2. A mains top up valve 16, controlled by a level switch 17, is also provided.

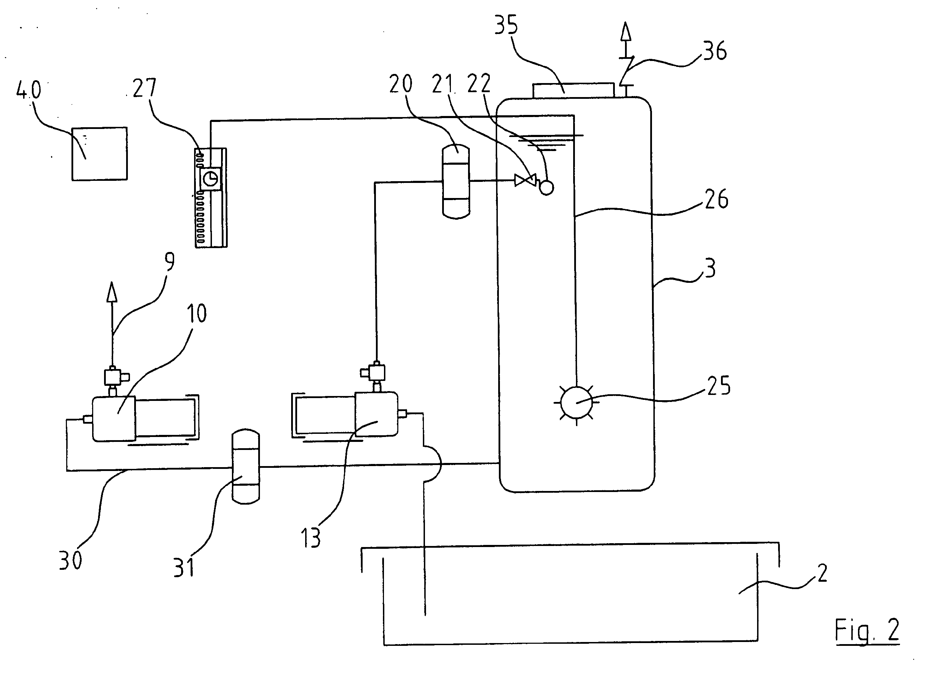

Referring now to Fig. 2, some of the details are removed and some of the parts are shown differently, however, they are, insofar as possible, identified by the same reference numerals. In this embodiment, there is illustrated a filter 20 delivering through a valve 21 operating a float 22. The water treatment tank 3 has mounted therein an ozone diffuser 25 connected by a pipe 26 to an ozone generator 27 of conventional construction. The pump 10 is fed from the bottom of the treatment tank 3 through a system outlet pipe 30 incorporating an ozone removal filter 31. The tank 3 has an inspection cover 35 and an ozone vent 36. A control unit 40 is illustrated but is not shown connected to any of these equipment.

In operation, when the level of water within the treatment tank 3 is sensed by the float 22 to have fallen below a certain level, the valve 21 is operated and water is pumped by the pump 13 through the filter 20 into the water treatment tank 3. At the same time, the ozone gas generator 27 is operated to deliver ozone through the pipe 26 through the diffuser 25 and then up through the water in the water treatment tank 30. The ozone is delivered for a preset time and is injected into the water treatment tank 3, after the valve 5 is closed on the requisite amount of water being delivered to the water treatment tank 3. The ozone gas generator 27 is used to deliver ozone at preset time intervals for preset durations of time.

The precise arrangement described above is not essential for the efficient operation of the assembly. For example, the ozone removal filter 31 may be sited after the pump 10. Also, many ozone extraction devices may be used.

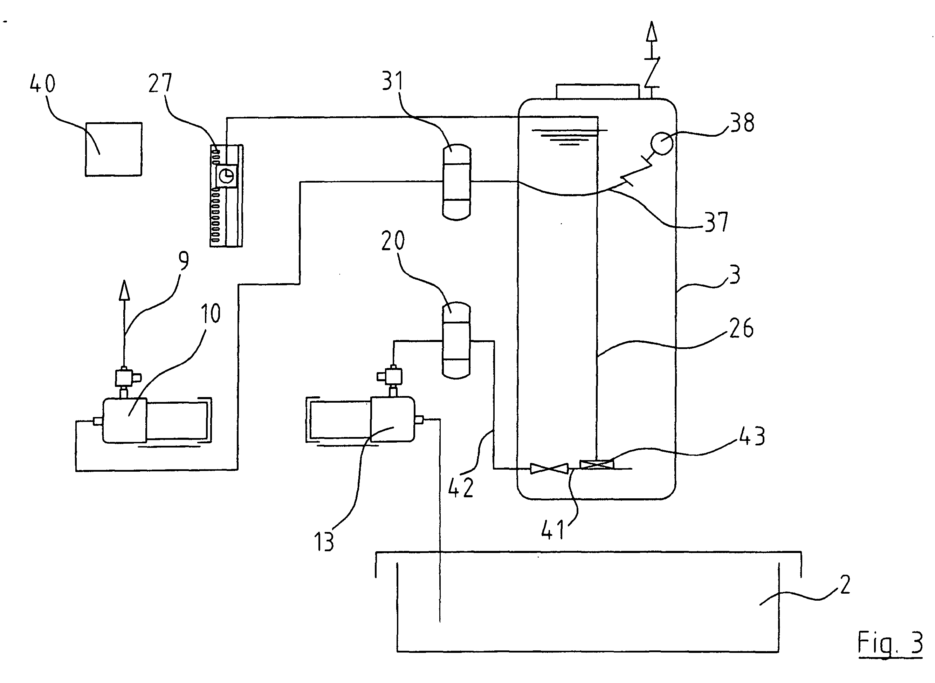

Referring to Fig. 3, there is illustrated an alternative construction of treatment tank, identified by the reference numeral 3, in which parts similar to those described with reference to the previous drawings, are identified by the same reference numerals. In this embodiment, there is provided a flexible outlet pipe 37 connected to a float 38 and then the pump 10. A valve, not shown, is also provided which is similar to the valve 21 of the previous embodiment. It will be further noted that the pump 13 delivers through the filter 20 as heretofore, but now to the bottom of the treatment tank 2 though an inlet 41 of a feed pipe 42 and housing a venturii 43 connected to the ozone generator 27. The advantage of this particular arrangement is that the water entering the treatment tank 2 is subject to ozone treatment immediately as it enters the tank. Suitable water level control means for the valve is provided but not illustrated.

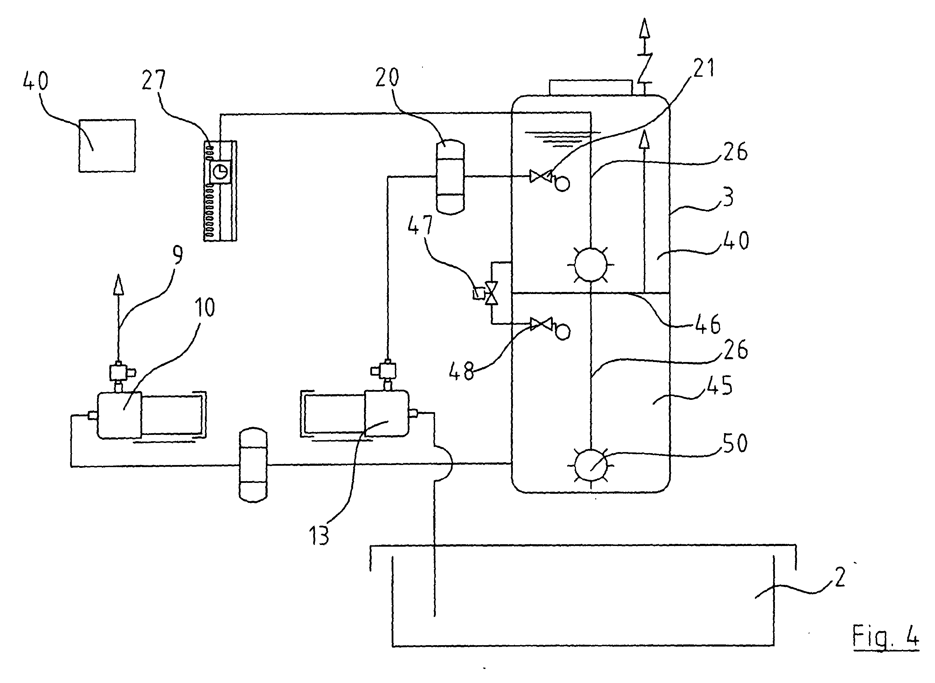

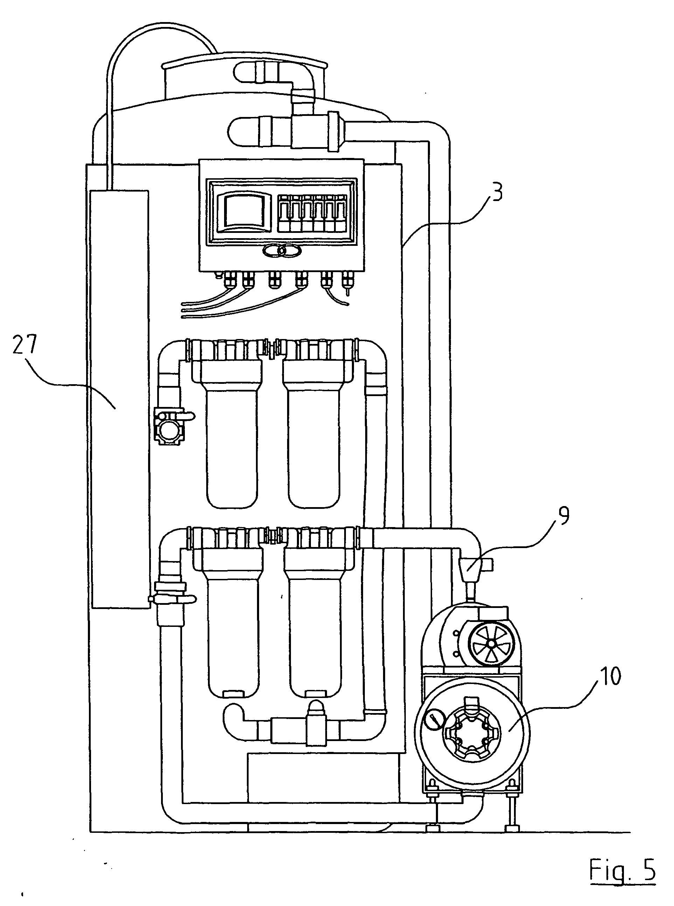

Referring now to Figs. 4 and 5, there is illustrated a still further construction of treatment tank, again identified by the reference numeral 3 and parts similar to those described with reference to the previous drawings are identified by the same reference numerals. In this embodiment, the treatment tank 3 is effectively the one tank divided to form two tanks, namely, into a treatment tank 40 and a draw-off tank 45 by a partition wall 46. Essentially, there are two tanks, namely, a treatment tank 40 and the draw-off tank 45. The treatment tank 40 and the ancillary equipment is connected in exactly the same manner as before, however, the treatment tank 40 is connected to the draw-off tank 45 through valves 47 and 48, the valve 48 being connected to a float 49. The pipe 26 extends from the ozone generator 27 through the partition 46 to an additional diffuser.

In operation, water is drawn off from the draw-off tank 45 in the same way as heretofore from the water treatment tank 3 and once the level of the water in the draw-off tank 45 falls below a preset level, water is delivered from the water treatment tank 40 into the draw-off tank 45.

There are many ways in which the apparatus according to the invention may be used. For example, the level of water in the treatment tank may be sensed and ozone can be injected into the treatment tank when the level falls below a preset level. Then, after that preset time, rainwater can be delivered to the treatment tank from the storage tank until the desired water level is attained. While the water is being delivered into the treatment tank, ozone can be delivered also into the treatment tank and indeed the injection of ozone can continue for a preset time after the water has been delivered into the treatment tank.

When a separate draw-off tank is used, as described above with reference to Figs. 4 and 5, the ozone can be injected into the water in the separate draw-off tank at preset time intervals and for a preset duration. Then, on requiring water, the water is drawn from the draw-off tank. When a draw-off tank is being used, it is possible to arrange such that when the draw-off of water ceases, the draw-off tank is topped up with water from the treatment tank and ozone is injected into the water in the draw-off tank. In this way, only fully treated water is used. Indeed, when the level of water of the draw-off tank falls below a preset water level, the draw-off of water can be stopped and the draw-off tank then filled with treated water from the treatment tank, ozone injected into the water in the draw-off tank for a preset time and then further draw-off water can take place.

It is also envisaged that as water is being drawn off from either the treatment tank or the draw-off tank, ozone can be injected into the water as it is being drawn off. Indeed, it is envisaged that when water is being delivered to either the treatment tank or the draw-off tank, ozone can be injected into the water, as it is being delivered into the tank.

Ideally, ozone is injected adjacent the bottom of either of the tanks. Ideally also, water is also delivered into the respective tanks adjacent the bottom of the tank.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A rainwater treatment process to provide potable water for dwellings comprising:
gathering rainwater;
delivering the rainwater to a storage tank; and
treating the stored rainwater to render it suitable for drinking;
**characterised in that** the process comprises treating the rainwater by:
delivering the rainwater to a separate treatment tank;
injecting ozone into the treatment tank adjacent a bottom of the tank at preset time intervals for preset time durations; and
on requiring water, the water is drawn off from the treatment tank and delivered to an ozone extraction device prior to delivery for use.

2. A process as claimed in claim 1, in which additionally as the water is being drawn off, it is filtered to remove contaminants oxidised by the ozone.

3. A process as claimed in claim 1 or 2, in which the steps are performed of:
sensing the level of liquid in the treatment tank;
injecting ozone into the treatment tank when the level falls below a preset level;
after a preset time, delivering rainwater to the treatment tank from the storage tank until a desired water level is reached; and
continuing to inject ozone for a further preset time.

4. A process as claimed in any preceding claim, in which:
treated water is delivered from the treatment tank to a separate draw-off tank;
ozone is injected into the water in the draw-off tank at preset time intervals and for preset time durations; and
on requiring water, the water is drawn-off from the draw-off tank.

5. A process as claimed in claim 4, in which when the draw-off of water ceases, the draw-off tank is topped up with water from the treatment tank and ozone is injected into the water in the draw-off tank.

6. A process as claimed in claim 4 or 5, in which on the level of water in the draw-off tank falling below a preset level:
the draw-off of water is stopped;
the draw-off tank is filled with treated water from the treatment tank;
ozone is injected into the water for a preset time; and
the further draw-off of water can take place.

7. A process as claimed in any preceding claim, in which recirculation of the water is carried out by drawing the water from the treatment tank, injecting ozone as it is being drawn off from the tank and delivering the treated water back to the treatment tank.

8. A process as claimed in any preceding claim, in which on water being delivered to the treatment tank, the ozone is injected into the incoming water.

9. A process as claimed in any preceding claim, in which the water is delivered adjacent a bottom of the tank.

10. A rainwater treatment assembly (1) comprising:
a rainwater storage tank (2);
a rainwater treatment tank (3) connected to the storage tank (2);
an ozone generator (27);
an ozone diffuser (10) in the treatment tank (3) adjacent a bottom of the tank connected to the ozone generator (27);
a controller (40), including a water level sensor (22) in the treatment tank (3) for draw-off of water from the storage tank (2) and operation of the ozone generator (27),
a system outlet pipe (30) for connection to a water supply system of a dwelling; and
a filter (31) connected to the system outlet pipe (30), the filter (31) comprising an ozone dissipater.

11. An assembly (1) as claimed in claim 10 comprising:
a water inlet (41) in the treatment tank (3) adjacent a lowest part of the treatment tank (3);
a water feed pipe (42) connected to the inlet (41); and
a venturii (43) in the water feed pipe (42) connected to the ozone generator (27).

12. An assembly (1) as claimed in claim 10 or 11, in which there is provided a draw-off tank (45) intermediate the treatment tank (3) and the system outlet pipe (30), the draw-off tank (45) being connected to the ozone generator (27) and the controller (40).

13. An assembly (1) as claimed in claim 12, comprising a composite tank divided into two separate storage sections to provide the draw-off and treatment tanks (3, 45).

## Patentansprüche

1. Regenwasser-Aufbereitungsverfahren zum Bereitstellen von trinkbarem Wasser für Behausungen, das Folgendes umfasst:
Sammeln von Regenwasser;
Zuführen des Regenwassers an einen Speicherbehälter; und
Aufbereiten des gespeicherten Regenwassers, um es zum Trinken geeignet zu machen;
**dadurch gekennzeichnet, dass** das Verfahren das Aufbereiten des Regenwassers umfasst, durch:
Zuführen des Regenwassers an einen getrennten Aufbereitungsbehälter;
Injizieren von Ozon in den Aufbereitungsbehälter angrenzend an einen Boden des Behälters in voreingestellten Zeitabständen während voreingestellter Zeitdauern; und
wobei, wenn Wasser benötigt wird, das Wasser aus dem Aufbereitungsbehälter abgezapft und vor der Zufuhr zum Gebrauch an eine Ozonextraktionsvorrichtung zugeführt wird.

2. Verfahren nach Anspruch 1, wobei zusätzlich, während das Wasser abgezapft wird, es gefiltert wird, um durch das Ozon oxidierte Verunreinigungen zu entfernen.

3. Verfahren nach Anspruch 1 oder 2, wobei folgende Schritte ausgeführt werden:
Abfühlen des Flüssigkeitsfüllstands im Aufbereitungsbehälter;
Injizieren von Ozon in den Aufbereitungsbehälter, wenn der Füllstand unter einen voreingestellten Füllstand fällt;
Zuführen, nach einer voreingestellten Zeit, von Regenwasser an den Aufbereitungsbehälter aus dem Speicherbehälter, bis ein gewünschter Wasserfüllstand erreicht ist; und
Fortfahren mit dem Injizieren von Ozon während einer weiteren voreingestellten Zeit.

4. Verfahren nach einem der vorangehenden Ansprüche, wobei:
aufbereitetes Wasser aus dem Aufbereitungsbehälter an einen getrennten Abzapfbehälter zugeführt wird;
Ozon in voreingestellten Zeitabständen und während voreingestellter Zeitdauern in das Wasser im Abzapfbehälter injiziert wird; und
wenn Wasser benötigt wird, das Wasser aus dem Abzapfbehälter abgezapft wird.

5. Verfahren nach Anspruch 4, wobei wenn das Abzapfen von Wasser aufhört, der Abzapfbehälter mit Wasser aus dem Aufbereitungsbehälter aufgefüllt wird und Ozon in das Wasser im Abzapfbehälter injiziert wird.

6. Verfahren nach Anspruch 4 oder 5, wobei wenn der Wasserfüllstand im Abzapfbehälter unter einen voreingestellten Füllstand fällt:
das Abzapfen von Wasser beendet wird;
der Abzapfbehälter mit aufbereitetem Wasser aus dem Aufbereitungsbehälter gefüllt wird;
Ozon während einer voreingestellten Zeit in das Wasser injiziert wird; und
das weitere Abzapfen von Wasser stattfinden kann.

7. Verfahren nach einem der vorangehenden Ansprüche, wobei die Rückführung des Wassers ausgeführt wird, indem das Wasser aus dem Aufbereitungsbehälter gezapft wird, Ozon injiziert wird, während es aus dem Behälter abgezapft wird und das aufbereitete Wasser zurück an den Aufbereitungsbehälter zugeführt wird.

8. Verfahren nach einem der vorangehenden Ansprüche, wobei, wenn Wasser an den Aufbereitungsbehälter zugeführt wird, das Ozon in das eintretende Wasser injiziert wird.

9. Verfahren nach einem der vorangehenden Ansprüche, wobei das Wasser angrenzend an einen Boden des Behälters zugeführt wird.

10. Regenwasser-Aufbereitungseinheit (1), die Folgendes umfasst:
einen Regenwasser-Speicherbehälter (2);
einen mit dem Speicherbehälter (2) verbundenen Regenwasser-Aufbereitungsbehälter (3);
einen Ozongenerator (27);
einen Ozondiffusor (10) im Aufbereitungsbehälter (3) angrenzend an einen Boden des Behälters, der mit dem Ozongenerator (27) verbunden ist;
ein Steuergerät (40) mit einem Wasserfüllstandssensor (22) im Aufbereitungsbehälter (3) für das Abzapfen von Wasser aus dem Speicherbehälter (2) und den Betrieb des Ozongenerators (27),
ein Systemauslassrohr (30) für den Anschluss an ein Wasserversorgungssystem einer Behausung; und
einen mit dem Systemauslassrohr (30) verbundenen Filter (31), wobei der Filter (31) einen Ozondissipator umfasst.

11. Einheit (1) nach Anspruch 10, die Folgendes umfasst:
einen Wassereinlass (41) im Aufbereitungsbehälter (3) angrenzend an einen tiefsten Teil des Aufbereitungsbehälters (3);
ein mit dem Einlass (41) verbundenes Wasserspeiserohr (42); und
ein Venturirohr (43) im Wasserspeiserohr (42), das mit dem Ozongenerator (27) verbunden ist.

12. Einheit (1) nach Anspruch 10 oder 11, wobei zwischen dem Aufbereitungsbehälter (3) und dem Systemauslassrohr (330) ein Abzapfbehälter (45) vorgesehen ist, wobei der Abzapfbehälter (45) mit dem Ozongenerator (27) und dem Steuergerät (40) verbunden ist.

13. Einheit (1) nach Anspruch 12, umfassend einen Verbundbehälter, der in zwei getrennte Speicherabschnitte unterteilt ist, um den Abzapfbehälter und den Aufbereitungsbehälter (3, 45) vorzusehen.

## Revendications

1. Procédé de traitement d'eau de pluie permettant de fournir de l'eau potable à des habitations comportant :
la collecte d'eau de pluie ;
l'acheminement de l'eau de pluie jusqu'à un réservoir de stockage ; et
le traitement de l'eau de pluie stockée pour la rendre propre à la consommation ;
**caractérisé en ce que** le procédé comporte le traitement de l'eau de pluie par :
l'acheminement de l'eau de pluie jusqu'à un réservoir de traitement séparé ;
l'injection d'ozone dans le réservoir de traitement de manière adjacente à un fond du réservoir selon des intervalles de temps prédéterminés pendant des durées prédéterminées ; et
lors de toute demande en eau, l'eau est soutirée du réservoir de traitement et acheminée jusqu'à un dispositif d'extraction d'ozone avant d'être acheminée à des fins d'utilisation.

2. Procédé selon la revendication 1, dans lequel, par ailleurs, alors que l'eau est soutirée, elle est filtrée pour éliminer les contaminants oxydés par l'ozone.

3. Procédé selon la revendication 1 ou la revendication 2, dans lequel sont exécutées les étapes consistant à :
capter le niveau de liquide dans le réservoir de traitement ;
injecter de l'ozone dans le réservoir de traitement quand le niveau tombe en dessous d'un niveau prédéterminé ;
après un laps de temps prédéterminé, acheminer de l'eau de pluie jusqu'au réservoir de traitement en provenance du réservoir de stockage jusqu'à ce qu'un niveau d'eau souhaité soit atteint ; et
continuer à injecter de l'ozone pendant un autre laps de temps prédéterminé.

4. Procédé selon l'une quelconque des revendications précédentes, dans lequel :
l'eau traitée est acheminée en provenance du réservoir de traitement jusqu'à un réservoir de soutirage séparé ;
de l'ozone est injectée dans l'eau dans le réservoir de soutirage selon des intervalles de temps prédéterminés et pendant des durées prédéterminées ; et
lors de toute demande en eau, l'eau est soutirée en provenance du réservoir de soutirage.

5. Procédé selon la revendication 4, dans lequel, quand le soutirage de l'eau prend fin, le réservoir de soutirage est rempli d'eau en provenance du réservoir de traitement et de l'ozone est injectée dans l'eau dans le réservoir de soutirage.

6. Procédé selon la revendication 4 ou la revendication 5, dans lequel, lorsque le niveau d'eau dans le réservoir de soutirage tombe en dessous d'un niveau prédéterminé :
le soutirage de l'eau est arrêté ;
le réservoir de soutirage est rempli d'eau traitée en provenance du réservoir de traitement ;
de l'ozone est injectée dans l'eau pendant un laps de temps prédéterminé ; et
tout autre soutirage d'eau peut avoir lieu.

7. Procédé selon l'une quelconque des revendications précédentes, dans lequel la recirculation de l'eau est effectuée par le soutirage de l'eau en provenance du réservoir de traitement, par l'injection d'ozone alors qu'elle est soutirée en provenance du réservoir et par l'acheminement de l'eau traitée de retour dans le réservoir de traitement.

8. Procédé selon l'une quelconque des revendications précédentes, dans lequel, lorsque l'eau est acheminée jusqu'au réservoir de traitement, l'ozone est injectée dans l'eau d'admission.

9. Procédé selon l'une quelconque des revendications précédentes, dans lequel l'eau est acheminée de manière adjacente à un fond du réservoir.

10. Ensemble de traitement d'eau de pluie (1), comportant :
un réservoir de stockage d'eau de pluie (2) ;
un réservoir de traitement d'eau de pluie (3) raccordé au réservoir de stockage (2) ;
un générateur d'ozone (27) ;
un diffuseur d'ozone (10) dans le réservoir de traitement (3) de manière adjacente à un fond du réservoir raccordé au générateur d'ozone (27) ; un dispositif de commande (40), comprenant un capteur de niveau d'eau (22) dans le réservoir de traitement (3) à des fins de soutirage de l'eau en provenance du réservoir de stockage (2) et à des fins de fonctionnement du générateur d'ozone (27) ;
un tuyau de sortie du circuit (30) à des fins de raccordement à un circuit d'alimentation en eau d'une habitation ; et
un filtre (31) raccordé au tuyau de sortie du circuit (30), le filtre (31) comportant un dissipateur d'ozone.

11. Ensemble (1) selon la revendication 10 comportant :
une entrée d'eau (41) dans le réservoir de traitement (3) de manière adjacente à une partie la plus basse du réservoir de traitement (3) ;
un tuyau d'alimentation en eau (42) raccordé à l'entrée (41) ; et
un venturi (43) dans le tuyau d'alimentation en eau (42) raccordé au générateur d'ozone (27).

12. Ensemble (1) selon la revendication 10 ou la revendication 11, dans lequel on a mis en oeuvre un réservoir de soutirage (45) de manière intermédiaire entre le réservoir de traitement (3) et le tuyau de sortie du circuit (30), le réservoir de soutirage (45) étant raccordé au générateur d'ozone (27) et au dispositif de commande (40).

13. Ensemble (1) selon la revendication 12, comportant un réservoir composite divisé en deux sections de stockage séparées pour la mise en oeuvre du réservoir de soutirage (45) et du réservoir de traitement (3).
